# EUROPÄISCHE PATENTANMELDUNG

(11) **EP 1 167 955 A2**
(43) Veröffentlichungstag der Anmeldung: **02.01.2002**
(21) Anmeldenummer: 01114933.3
(22) Anmeldetag: 20.06.2001
(51) Int. Cl.: G01N 27/22

(54) **Hochtemperaturstoffsensor**

(30) Priorität: 30.06.2000 DE 10031976
(71) Anmelder: DaimlerChrysler AG, 70567 Stuttgart (DE)
(72) Erfinder: Birkhofer, Thomas, 88090 Immenstaad (DE); Maunz, Werner, 88677 Markdorf (DE); Moos, Ralf, Dr., 88048 Friedrichshafen (DE); Müller, Ralf, 88326 Aulendorf (DE); Müller, Willi, 88682 Salem (DE); Plog, Carsten, Dr. rer. nat., 88677 Markdorf (DE)

(57) **Zusammenfassung**

Die Erfindung betrifft einen Hochtemperaturstoffsensor, umfassend
- ein Substrat (4),
- eine Anordnung (6), um den Sensor auf Temperatur zu bringen und zu halten, und
- eine schichtartige Kondensatorstruktur (38) mit Strukturgrößen kleiner als 50µm, auf die eine Funktionsschicht (18) aufgebracht ist.

Erfindungsgemäß wurde die schichtartige Kondensatorstruktur (38) folgendermaßen erzeugt:
- Aufbringen einer geschlossenen oder bereits vorstrukturierten elektrisch leitfähigen Schicht als Vorläufer der Kondensatorstruktur (38) mittels Dickschichttechnik,
- Strukturierung der elektrisch leitfähigen Schicht mittels photolithographischem Verfahren.

## Beschreibung

Die Erfindung betrifft einen Hochtemperaturstoffsensor, insbesondere einen Abgassensor im Abgasstrang eine Kraftfahrzeugs.

Um den immer strengeren Auflagen des Gesetzgebers bezüglich der Luftreinhaltung zu entsprechen, werden sehr selektive Gassensoren benötigt. Solche Sensoren können z.B. zur Überwachung von Schadstoffgrenzwerten oder als Alarmmelder beim Überschreiten einer gefährlichen oder giftigen Konzentrationsschwelle eines Gases in der Umgebungsluft eingesetzt werden. Aber auch direkt im Abgas eines Verbrennungsprozesses können solche Gassensoren eingesetzt werden. Beispiele hierfür sind selektive Kohlenwasserstoffsensoren, wie sie z.B. aus der EP 0 426 989 bekannt sind, oder selektive Ammoniaksensoren, wie sie z.B. aus der DE 197 03 796 bekannt sind.

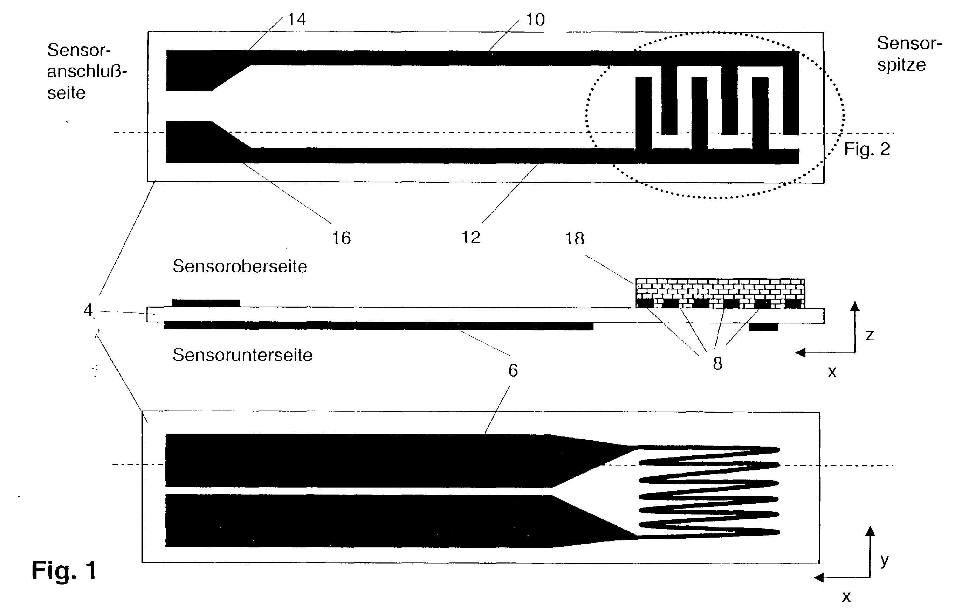

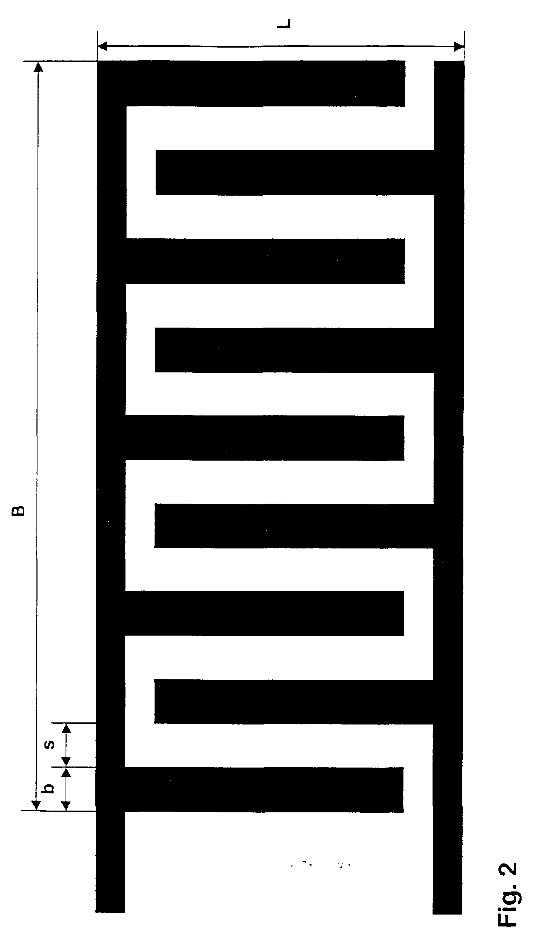

Bei den erwähnten Beispielen handelt es sich um Gassensoren, die in Planartechnik (insbesondere Dickschichttechnik oder Dünnschichttechnik) gefertigt werden. In Fig. 1 ist in verschiedenen Ansichten der typische Aufbau eines solchen Sensors skizziert. Auf ein Substrat 4, welches auf der Sensorunterseite eine Struktur 6 zum Heizen und evtl. zur Temperaturmessung aufweist, ist auf der Sensoroberseite an der Sensorspitze eine Kondensatorstruktur aufgebracht. Diese Struktur, die in Fig. 2 nochmals vergrößert dargestellt ist, besteht aus vielen versetzten Elektroden 8, die wechselweise mit der Zuleitungsbahn 10 oder der Zuleitungsbahn 12 verbunden sind. Die Zuleitungsbahnen 10 und 12 besitzen an der Sensoranschlussseite jeweils ein Kontaktpad 14 und 16, an welche Zuleitungsdrähte angebracht werden. Legt man an die beiden Zuleitungen eine Wechselspannung an, so lässt sich die Kapazität C_{L} dieser Struktur (im Folgenden als Leerkapazität bezeichnet) messen. Da diese Kondensatorstruktur wie ineinandergreifende Finger aussieht, wird eine solche Struktur auch als Inter-Digital-Kondensator (IDK) bezeichnet. Wird nun auf diese IDK-Struktur eine Funktionsschicht 18, -in der Aufsicht zur Veranschaulichung nicht dargestellt- aufgebracht, deren elektrische Eigenschaften sich mit der Beaufschlagung eines Gases ändern, so kann man damit einen Gassensor aufbauen. Solch ein Aufbau ist prinzipiell nicht nur für Sensoren, die Komponenten einer Gasmischung detektieren, geeignet, sondern er ist für alle Stoffsensoren geeignet.

Unter einem Stoffsensor soll hier ein Sensor zur Bestimmung der Konzentration eines Stoffes in einer Stoffmischung, d.h. z.B. ein Sensor zur Bestimmung der Konzentration eines Bestandteils einer Gasmischung oder ein Sensor zur Bestimmung einer Komponente einer Flüssigkeit oder ein Sensor der aufgrund der Wechselwirkung mit einem Gas oder einer Flüssigkeit sein Ausgangssignal verändert, verstanden werden.

Die oben beschriebene Anordnung bestehend aus Substrat, Heiz- und/oder Temperaturmesswiderstandsanordnung und IDK-Struktur wird im Folgenden als "Übertrager" bezeichnet. Ein Sensor besteht dem gemäß also mindestens aus einem Übertrager und einer Funktionsschicht.

### Abschätzung der Signalgröße

Die Signaländerungen, die zu messen sind, hängen von der Geometrie der IDK-Struktur ab. Diese ist in Fig. 2 noch einmal vergrößert skizziert. Die gesamte IDK-Struktur besitzt als äußere Abmessungen die Länge L und die Breite B. Auf der Breite B sind Elektrodenfinger der Breite b im Abstand s angeordnet. Man kann sich somit den gesamten Kondensator als Parallelschaltung von vielen Teilkondensatoren vorstellen, wobei jeder Teilkondensator aus zwei benachbarten Fingern besteht. Die Leerkapazität dieser Teilkondensatoren, -und damit auch die gesamte Leerkapazität C_{L}-, nimmt mit der Fingerlänge L zu. Mit sich verringerndem Fingerabstand s nimmt die Leerkapazität der Teilkondensatoren ebenfalls zu, da die Dichte der Feldlinien zwischen zwei Fingern zunimmt (zum Vergleich: beim Plattenkondensator ist die Kapazität umgekehrt proportional zum Plattenabstand). Da die Gesamtkapazität sich aus der Parallelschaltung der Teilkapazitäten errechnet, wird die Gesamtkapazität um so größer, je mehr Teilkondensatoren sich auf der Breite B unterbringen lassen. Mit sich verringernder Fingerbreite b nimmt deshalb die Kapazität des Gesamtkondensators zu, da die Zahl der parallelgeschalteten Teilkondensatoren mit abnehmender Fingerbreite b bei konstanter äußerer Abmessung B zunimmt. Mit sich verringerndem Fingerabstand s nimmt demnach die Kapazität des Gesamtkondensators sogar überproportional (fast quadratisch) zu, da einerseits die Anzahl der Teilkondensatoren und andererseits deren Kapazität zunimmt.

Die Höhe der Elektroden (Schichtdicke) sind nur von untergeordneter Bedeutung.

Im Folgenden sollen einige theoretische Berechnungen der Gesamtleerkapazität C_{L} vorgestellt werden, die mittels einer Finite-Elemente-Methode durchgeführt wurden. Dabei wurden die Abmessungen einer typischen IDK-Struktur, d.h. ca. 5mm x 6mm (L x B), zu Grunde gelegt. Für die relative Dielektrizitätskonstante εᵣ wurde der Wert von εᵣ≈10, wie man ihn für Al₂O₃-Substrate in Datenblättern findet, angenommen. Die Ergebnisse der Berechnungen bestätigten, dass die Schichtdicke der IDK-Strukturen vernachlässigt werden kann.

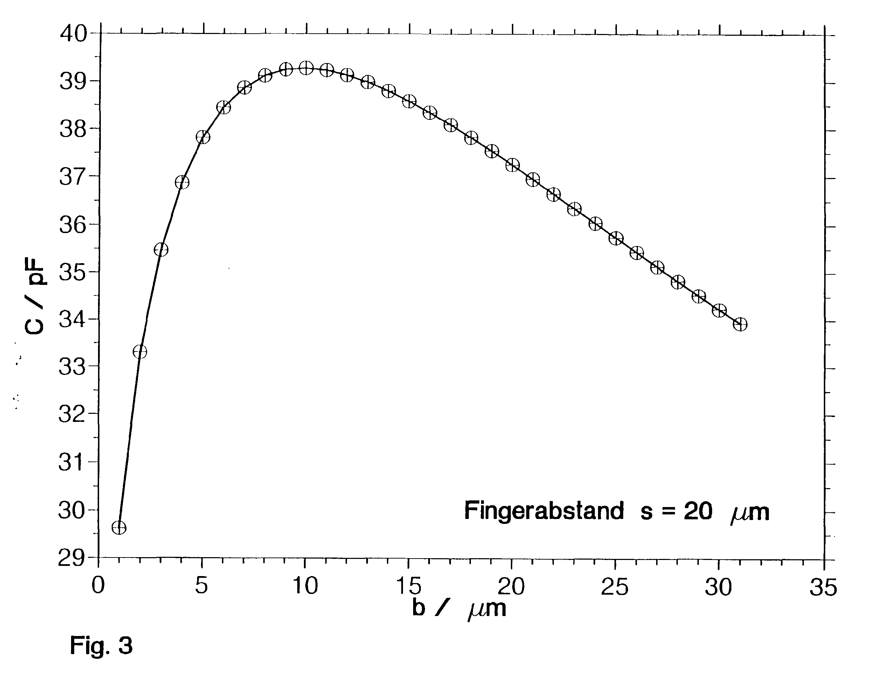

Es hat sich weiterhin herausgestellt, wie Fig. 3 zeigt, dass ein optimales Verhältnis von Linienabstand s und Fingerbreite b von s/b≈2 existiert, bei dem die Gesamtleerkapazität C_{L} ein Maximum erreicht. In Fig. 3 wurde ein Abstand der Finger von s=20µm angenommen. Bei einer Fingerbreite von b=9,88µm findet sich das Maximum der Leerkapazität. Variiert man den Fingerabstand s, so stellt man fest, dass der Wert des optimalen Verhältnisses fast unabhängig vom Abstand der Finger ist. Man erhält z.B. bei s=20µm einen optimalen Wert für die Fingerbreite von b=9,88µm (s/b=2,024) und bei s=10µm eine optimale Fingerbreite von b=4,54µm (s/b=2,203).

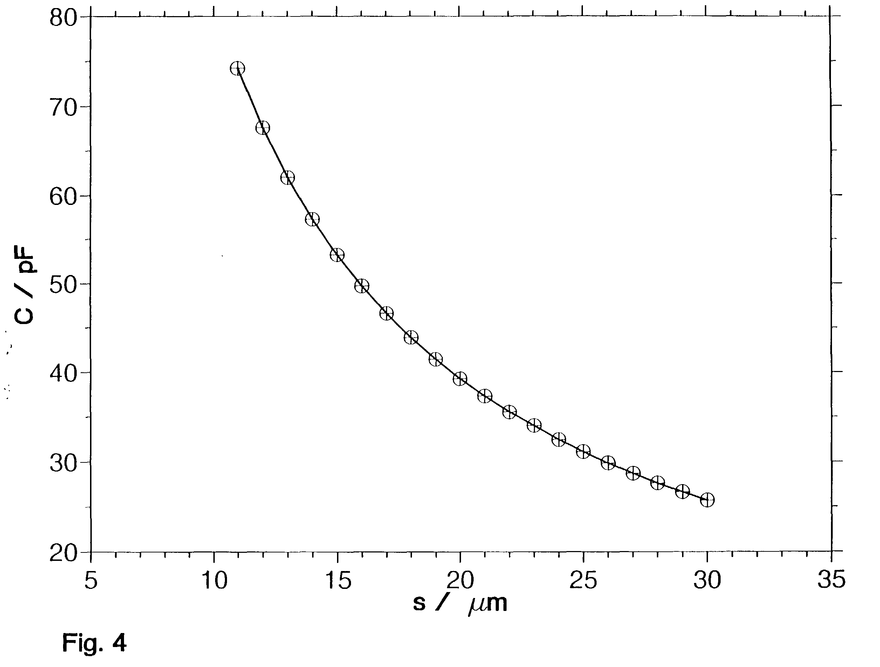

Die optimalen Leerkapazitäten sind in Fig. 4 für einen Fingerabstand zwischen 10µm und 30µm aufgetragen. Man erkennt, dass bei einem Fingerabstand von ca. 20µm eine Gesamtleerkapazität C_{L} von knapp 40pF erreicht werden kann. Tabelle 1 soll den Zusammenhang zwischen den geometrischen Größen b und s und den Gesamtleerkapazitäten C_{L} noch einmal verdeutlichen. Bei Strukturbreiten für s und b um 100µm erhält man nur Gesamtleerkapazitäten von C_{L}<10pF.

**Tabelle 1**

| Fingerabstand s/µm | Optimaler Fingerabstand b / µm | Gesamtleerkapazität C_{L} / pF | max. Kapazitätsänderung ΔCₘₐₓ / pF |
|---|---|---|---|
| 10 | 4,54 | 82,33 | 4,12 |
| 15 | 7,22 | 53,22 | 2,66 |
| 20 | 9,88 | 39,28 | 1,96 |
| 25 | 12,53 | 31,10 | 1,56 |
| 30 | 15,15 | 25,73 | 1,29 |

Bringt man nun die Funktionsschicht 18 auf, so erhöht sich die messbare Kapazität abhängig von der Dielektrizitätskonstante εᵣ der Funktionsschicht und deren Dicke. Es konnte aber gezeigt werden, dass der Einfluss der Schichtdicke der Funktionsschicht insbesondere bei Werten der Dielektrizitätskonstante εᵣ<5 kaum eine Rolle spielt. Nimmt man an, dass die zusätzliche Kapazität, die von der Funktionsschicht stammt, den halben Wert der Leerkapazität ausmacht, und nimmt man weiterhin an, dass sich die zusätzliche Kapazität bei Gasbeprobung um maximal 10% ihres Wertes ändert, so erhält man die maximal zu messende Kapazitätsänderung ΔCₘₐₓ, die in der vierten Spalte von Tabelle 1 aufgetragen ist. Es ist aus Tabelle 1 sofort ersichtlich, dass man, um überhaupt sicher messen zu können, möglichst kleine Fingerbreiten b und Fingerabstände s realisieren sollte. Dies ist insbesondere dann der Fall, wenn lange Zuleitungen, die üblicherweise Kapazitäten von einigen pF/m aufweisen, nötig sind. Dies ist z.B. dann der Fall, wenn der Sensor im Abgasstrang eines Kraftfahrzeuges angeordnet werden soll, um den Ammoniak- oder den Kohlenwasserstoffgehalt im Abgas eines Automobils messen zu können. Dabei ist zu beachten, dass selbst diese Zuleitungskapazitäten üblicherweise nicht konstant sind, sondern sich mit der Umgebungstemperatur ändern. Diese Zuleitungskapazitäten können nur aufwendig kompensiert werden.

Erschwerend kommen noch kleine Messströme hinzu. So errechnet sich bei einer Wechselspannungsamplitude von 1V und einer Kapazität von 50pF bei einer Messfrequenz von 1kHz ein kapazitiver Strom von 314nA, wobei die maximale Signaländerung (d.h. der Messeffekt) allerdings nur ca. 16nA beträgt. Will man das Sensorsignal auf 1% genau auflösen, muss man einen Messstrom von 160pA auflösen können. Da der Messstrom bei einem kapazitiven System bei konstant angelegter Messspannungsamplitude mit der Frequenz zunimmt, sollte man bei höheren Frequenzen messen, was aber die Gefahr von verstärkten Einstreuungen und elektromagnetischer Unverträglichkeit zur Folge hat. Da bei vorgegebener Messspannung der Messstrom proportional zur Kapazität ist, ist dies ein weiterer Grund, möglichst feine Strukturen, -d.h. hohe Kapazitäten-, für die IDK-Struktur zu wählen.

Die oben geschilderte Problematik von Funktionsschichten, deren kapazitiven Eigenschaften sich mit Beaufschlagung von Gas ändern, gilt in entsprechender Form auch für Sensoren, deren komplexe Impedanz (komplexer Wechselstromwiderstand) sich mit Gasbeprobung ändert. Vor allem hochohmige Funktionsschichten, die nur kleine Kapazitätswerte liefern, benötigen eine möglichst feine Struktur.

Als Strukturbreite, die Signale liefert, die gerade noch mit vertretbarem Aufwand messtechnisch erfassbar und elektrisch weiterverarbeitbar sind, hat sich 50µm herausgestellt.

Planare Gassensoren können entweder in Dickschichttechnik oder in Dünnschichttechnik (typische Verfahren der Dünnschichttechnik: Sputtern, Aufdampfen oder CVD) gefertigt werden. Beispiele, in denen auch die Prozesse erklärt werden, die bei der Fertigung von Stoffsensoren in Dickschichttechnik angewandt werden, findet man in /1/ oder /2/ oder in der DE 37 23 052. Dünnschichttechnik und Dickschichttechnik zu kombinieren (sog. Hybridtechnologie) ist möglich aber teuer.

Bei der Herstellung von Hochtemperaturstoffsensoren sind insbesondere die folgenden Anforderungen zu beachten (Unter Hochtemperaturstoffsensoren sind solche Sensoren zu verstehen, die auf Temperaturen über 300°C geheizt werden. Derartige Anforderungen werden insbesondere an Abgassensoren, z.B. im Abgas von Verbrennungsmotoren in Kraftfahrzeugen gestellt):

Mit Dünnschichttechnik können zwar feinste Strukturbreiten bis hinunter zu einigen wenigen µm erzielt werden, was für oben genanntes Beispiel sehr gut ausreichen würde. Jedoch lassen Dünnschichtverfahren nur Schichtdicken unter 1µm zu. Unter rauhen Umgebungsbedingungen, insbesondere beim längeren Betrieb bei hohen Temperaturen, sind solche dünnen Schichten nicht langzeitstabil. Weiterhin benötigt man für dünne Schichten üblicher hochtemperaturstabiler Elektrodenmaterialien wie Gold oder Platin sogenannte Haftvermittler, die z.B. einige nm dicke Schichten aus Chrom oder Titan sein können. Bei den hohen Einsatztemperaturen von Hochtemperaturgassensoren, z.B. von Abgassensoren, diffundieren diese Materialien dann an die Oberfläche der Elektroden und reagieren dort mit der Funktionsschicht 18. Dadurch verändert sich die Funktionsschicht und der Sensor kann unempfindlich für das zu detektierende Gas werden. Zudem können viele Funktionsschichten, insbesondere Zeolithe oder komplexe Mehrfachmetalloxide nicht in Dünnschichttechnik gefertigt werden. Zudem benötigt man für die Herstellung von Bauteilen in Dünnschichttechnik normalerweise besondere Substrate mit einer sehr geringen Oberflächenrauhigkeit, die wesentlich teurer (Faktor 5 bis 10) als herkömmliche keramische Substrate sind. Dadurch, dass sämtliche Dünnschichtverfahren Vakuumverfahren sind, benötigt man für die Dünnschichttechnik aufwendige Apparaturen, die sich üblicherweise erst bei der Herstellung sehr großer Stückzahlen amortisieren.

Die oben aufgeführten Argumente lassen den Schluss zu, dass die Dickschichttechnik sowohl aus technischen als auch aus Kostengründen das geeignete Herstellungsverfahren für Hochtemperaturgassensoren wäre.

Leider können mit Dickschichttechnik üblicherweise nur feinste Strukturbreiten im Bereich von 70µm bis 100µm reproduzierbar gefertigt werden. Die geforderten Auflösungen von unter 50µm, insbesondere ca. 20µm können mit der herkömmlichen Dickschichttechnik für Gassensoren nach dem Stand der Technik nicht erzielt werden.

Es ist deshalb Aufgabe der Erfindung, einen Hochtemperaturstoffsensor mit Strukturgrößen kleiner als 50µm zu schaffen, mit dem die beschriebenen Probleme hinsichtlich der Herstellung des Sensors überwunden werden können.

Diese Aufgabe wird mit den Hochtemperaturstoffsensor nach Patentanspruch 1 gelöst. Vorteilhafte Ausführungen der Erfindung sind Gegenstand weiterer Ansprüche.

Erfindungsgemäß erfolgt die Herstellung der Kondensatorstruktur des Hochtemperaturstoffsensors aus einer Kombination dickschichttechnischer Verfahren mit einem photolithographischem Strukturierungsprozess, der in der Planartechnik zur Herstellung von Halbleiterbauteilen angewandt wird. Er wird hier zum ersten Mal bei der Herstellung von Stoffsensoren angewandt. Die Herstellung der übrigen Schichten des Hochtemperaturstoffsensors erfolgt vorteilhaft in Dickschichttechnik, z.B. in Siebdrucktechnik.

Zur Herstellung der Kondensatorstruktur wird zuerst eine geschlossene oder bereits vorstrukturierte Kondensatorschicht als Vorläufer der Kondensatorstruktur mittels Dickschichttechnik erzeugt. Anschließend erfolgt die Strukturierung der Kondensatorschicht mittels Photolithographie.

Der erfindungsgemäße Hochtemperaturstoffsensor eignet sich insbesondere zur Verwendung als Abgassensor in Verbrennungsabgasen, z.B. im Abgas eines Kraftfahrzeugs.

Er kann beispielsweise als Ammoniak- oder Kohlenwasserstoffsensor ausgebildet sein.

Die Erfindung wird anhand von Zeichnungen beispielhaft erläutert. Es zeigen:
- Fig. 1: der Aufbau eines Stoffsensors in mehreren Ansichten;
- Fig. 2: die Kondensatorstruktur eines Stoffsensors;
- Fig. 3: die Kapazität C einer Interdigital-Kondensatorstruktur in Abhängigkeit vom Fingerabstand b bei konstantem Linienabstand s;
- Fig. 4: die maximale Kapazität C einer Interdigital-Kondensatorstruktur bei variablem Fingerabstand b und konstantem Linienabstand s für mehrere Werte des Linienabstands s;
- Fig. 5,6: jeweils Skizzen zum Ablauf der Herstellung eines erfindungsgemäßen Hochtemperaturstoffsensors;
- Fig. 7: Messprotokoll, gewonnen mit einem mittels Hybridtechnik hergestellten Stoffsensor, dessen Fingerbreite s = 10 µm betrug;
- Fig. 8: Messprotokoll, gewonnen mit einem in Dickschichttechnik hergestellten Stoffsensor, dessen Fingerbreite s = 100 µm betrug;
- Fig. 9: Messprotokoll, gewonnen mit einem erfindungsgemäßen Stoffsensor, dessen Fingerbreite s = 20 µm betrug.

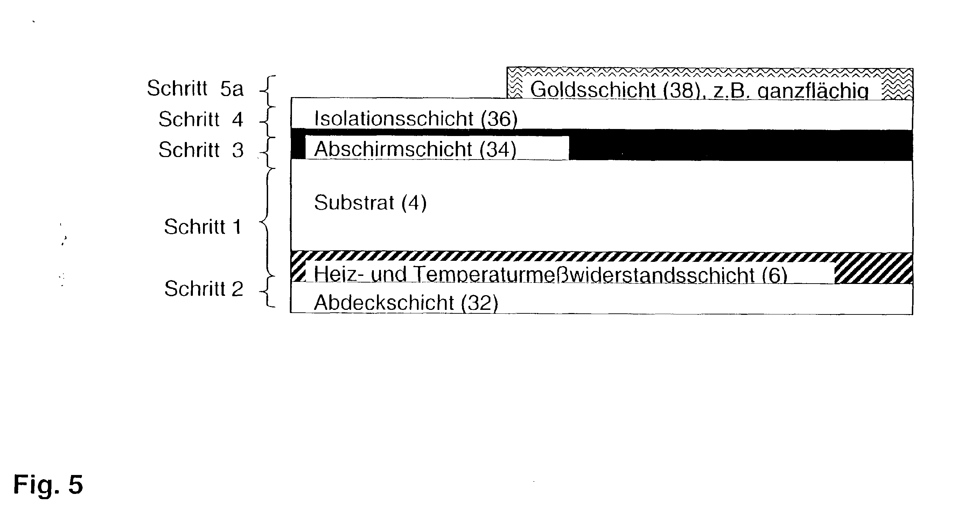

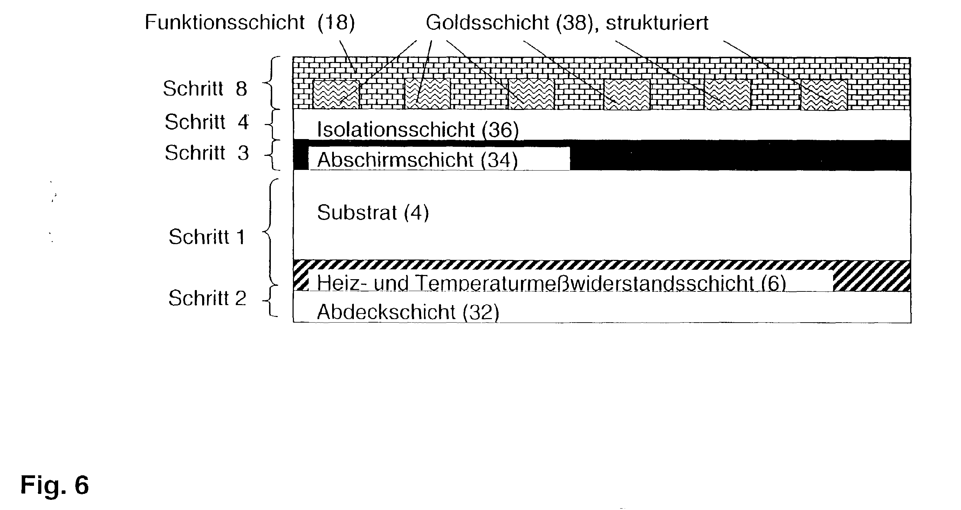

An einem typischen Beispiel und unter Bezugnahme auf die Fig. 5 und 6 wird die Herstellung des erfindungsgemäßen Hochtemperatursensors Schritt für Schritt beschrieben.

### Schritt 1:

Auf ein keramisches Substrat 4, das z.B. aus handelsüblichem 96%igem Al₂O₃ besteht, wird auf die Unterseite eine Heiz- und Temperaturmesswiderstandsstruktur 6, die z.B. aus Platin bestehen kann, strukturiert aufgebracht und anschließend bei 1400°C gebrannt. Das Aufbringen der Heiz- und Temperaturmesswiderstandsstruktur 6 erfolgt mittels Siebdrucktechnik als ein Beispiel für ein dickschichttechnisches Verfahren.

### Schritt 2:

Auf diese Schicht wird eine keramische Abdeckschicht 32, die die Heiz- und Temperaturmesswiderstandsstruktur 6 schützt, ganzflächig mittels Siebdruck aufgebracht und z.B. bei 1300°C gebrannt.

### Schritt 3:

Nun wird auf die andere Seite des Substrates eine Abschirmschicht 34, die z.B. aus Platin bestehen kann, in geeigneter Struktur mittels Siebdrucktechnik aufgebracht und bei 1250°C gebrannt.

### Schritt 4:

Auf die Abschirmschicht 34 wird zur elektrischen Isolation eine Keramiksicht, Glasschicht oder eine Glaskeramikschicht 36 ebenfalls in Siebdrucktechnik aufgebracht und eingebrannt.

Die Schritte 3 und 4 sind nur nötig, wenn der Gassensor eine Schicht zur elektrischen Abschirmung erhalten soll. Sie dient dazu, den Sensormessvorgang gegen Störungen aufgrund des Heizvorgangs an der Heiz- und Temperaturmesswiderstandsschicht 6 abzuschirmen.

### Schritt 5a:

Nun wird mittels Siebdrucktechnik eine Goldschicht 38, ganzflächig oder schon vorstrukturiert aufgebracht und eingebrannt.

### Schritt 5b:

Auf diese Goldschicht 38 wird eine photoempfindliche Lackschicht mittels eines Spin-Prozesses aufgetragen und so erwärmt, dass der Lack vernetzt. Eine Photomaske, die die IDK-Struktur enthält, wird auf der Photolackschicht exakt platziert und der Photolack wird belichtet. Anschließend wird entwickelt, wobei die belichteten Teile des Lackes in einer geeigneten alkalischen Lösung entfernt werden. Die nun noch auf der Goldschicht 38 vorhandenen Lackteile sind ein Abbild der IDK-Struktur. In einem Ätzbad, bestehend z.B. aus einer Jod-Kaliumjodid-Lösung, werden die nicht vom Lack abgedeckten Flächen der Goldschicht 38 entfernt. Danach müssen sorgfältig Reste der Ätzlösung in destilliertem Wasser entfernt werden. In einem geeigneten Lösemittel (z.B. Aceton) werden dann die restlichen Lackflächen entfernt. Darunter kommt dann die IDK-Struktur zum Vorschein, die noch einmal gereinigt wird. Um evtl. noch vorhandene Lack- oder Lösemittelreste zu vernichten, wird die Goldschicht noch einmal saubergebrannt. Auf die Entfernung der Lackschicht per Lösemittel kann auch verzichtet werden, indem direkt der Lack verbrannt wird. Nach diesem Prozess ist die IDK-Struktur fertiggestellt und es kann die Funktionsschicht aufgebracht werden. Die Struktur ist in Fig. 6 skizziert. Die maximal erzielbare Auflösung wurde im Rahmen der Versuche, abhängig von der Wahl der Goldpaste auf ca. 15 µm bestimmt. Die Arbeiten sollten in einem Reinraum durchgeführt werden, da Verunreinigungen sofort zu einem Fehler (Kurzschluss oder Unterbrechung) in der IDK-Struktur führen. Die verwendete Goldpaste sollte so beschaffen sein, dass sie im gebrannten Zustand eine möglichst glatte Oberfläche bildet, auf die die Belichtungsmaske aufgelegt werden kann.

Schritt 5 ist eine Kombination aus einem typischen dickschichttechnischen Verfahren mit einem photolithographischen Prozess, wie er in der Planartechnik für die Herstellung von Halbleiterbauelementen benutzt werden. Er wird hier zum ersten Mal zur Herstellung von Gassensoren angewandt. Man erhält eine IDK-Struktur, die alle für die Herstellung von Hochtemperaturgassensoren benötigten Eigenschaften, wie Schichtdicke im µm-Bereich, Temperaturstabilität, Herstellbarkeit auf gewöhnlichen, für die Dickschichttechnik üblichen und kostengünstigen Substraten, aufweisen. Zusätzlich besitzen solche Transducer aber auch die oben beschriebene notwendige feine Auflösung.

Hier wurde in Schritt 5 die Herstellung einer IDK-Struktur mittels einer photolithographisch strukturierten Goldschicht beschrieben. Auch aus Platin oder anderen hochtemperaturstabilen Metallen kann eine solche IDK-Struktur hergestellt werden. Im Falle des Platin als Werkstoff für die IDK wird man eine geeignete Platinschicht in Dickschichttechnik aufbringen und diese mittels eines geeigneten Lacks und eines geeigneten Lösemittels strukturieren.

Alternativ zu dem beschriebenen photolithographischen Strukturierungsprozess, bei dem die laufgebrachte Photomaske der Kondensatorstruktur entspricht, und bei dem in einem weiteren Schritt die belichteten Bereiche der Lackschicht entfernt werden, kann auch ein Verfahren unter Einsatz eines sogenannten Negativlacks eingesetzt werden. Dabei entspricht die aufgebrachte Photomaske dem Negativ der Kondensatorstruktur, wobei in einem weiteren Schritt die unbelichteten Bereiche der Lackschicht entfernt werden.

### Schritt 6:

Auf den fertigen Übertrager werden in Siebdrucktechnik Zuleitungsbahnen 12 und 14 aufgedruckt und diese wiederum eingebrannt. Die Kontaktpads 14 und 16 können z.B. durch Siebdrucken und Brennen einer geeigneten Paste noch einmal aufgedickt werden, so dass sie gut mit Zuleitungsdrähten kontaktiert werden können. Der Schritt 6 ist der Übersichtlichkeit halber in Fig. 6 nicht eingezeichnet.

### Schritt 7:

Es kann sich für manche Anwendungen anbieten, die Zuleitungen mit einer Schutzschicht zu bedrucken und diese Schutzschicht wiederum einzubrennen. Mit Schritt 6 oder Schritt 7 ist der Übertrager fertig. Der Schritt 7 ist der Übersichtlichkeit halber in Fig. 6 nicht eingezeichnet.

### Schritt 8:

Auf den Übertrager wird nun die Funktionsschicht 18 ebenfalls in Dickschichttechnik aufgebracht und gebrannt.

Die Vorteile des erfindungsgemäßen Aufbaus werden im Folgenden an einem Beispiel nochmals verdeutlicht. Als Beispiel für eine typische Funktionsschicht dient eine Zeolithschicht, die für einen selektiven Ammoniaksensor für Anwendungen im Abgasstrang eines Kraftfahrzeuges Verwendung findet.

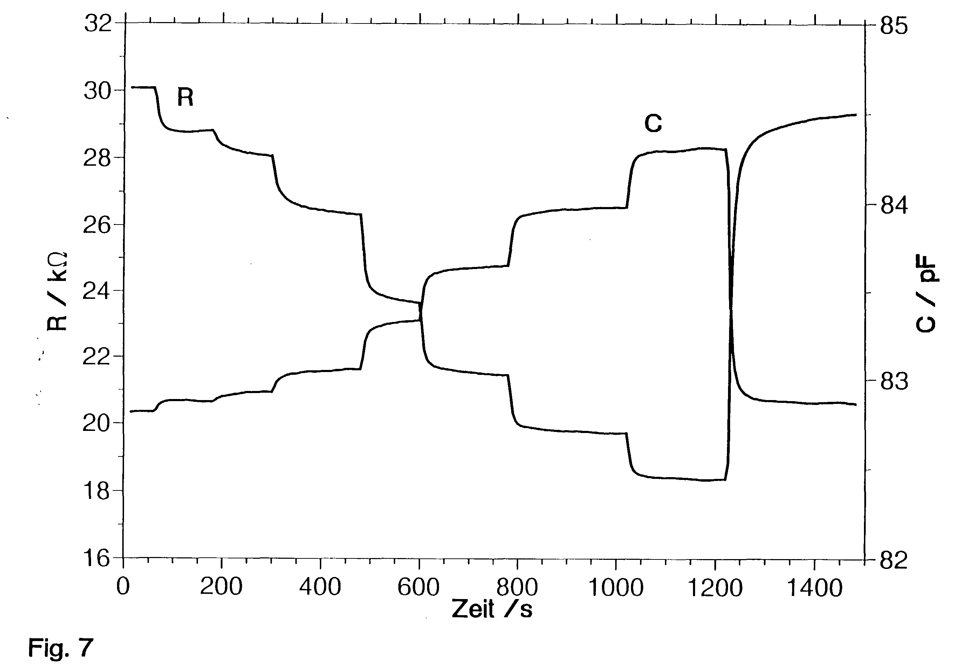

Fig. 7 bis Fig. 9 zeigen die Messprotokolle, die mit unterschiedlichen Sensoren gewonnen wurden. Die Sensoren unterscheiden sich lediglich in den Strukturbreiten. Die Funktionsschicht aller drei Sensoren wurde aus der selben Zeolithcharge gemäß der selben Herstellvorschrift gefertigt. Aufgetragen ist bei der Arbeitstemperatur des Sensors der Verlauf des Sensorsignals bei Beaufschlagung des Sensors mit 5 ppm, 10 ppm, 20 ppm, 40 ppm, 60 ppm, 80 ppm und 100 ppm Ammoniak in einer Atmosphäre, die dem Abgas eines Kraftfahrzeuges nachgebildet wurde. Die Messsignale wurden von einer Impedanzmessbrücke bei jeweils der gleichen Frequenz aufgenommen und als Parallelschaltung eines Kondensators und eines Widerstandes (verlustbehafteter Kondensator) ausgewertet.

Der Sensor A (Fig. 7) wies eine Fingerbreite von s=10µm auf. Sensor A wurde in Hybridtechnik gefertigt. Die IDK-Struktur von Sensor A wurde in Dünnschichttechnik und die Zeolithschicht in Dickschichttechnik hergestellt.

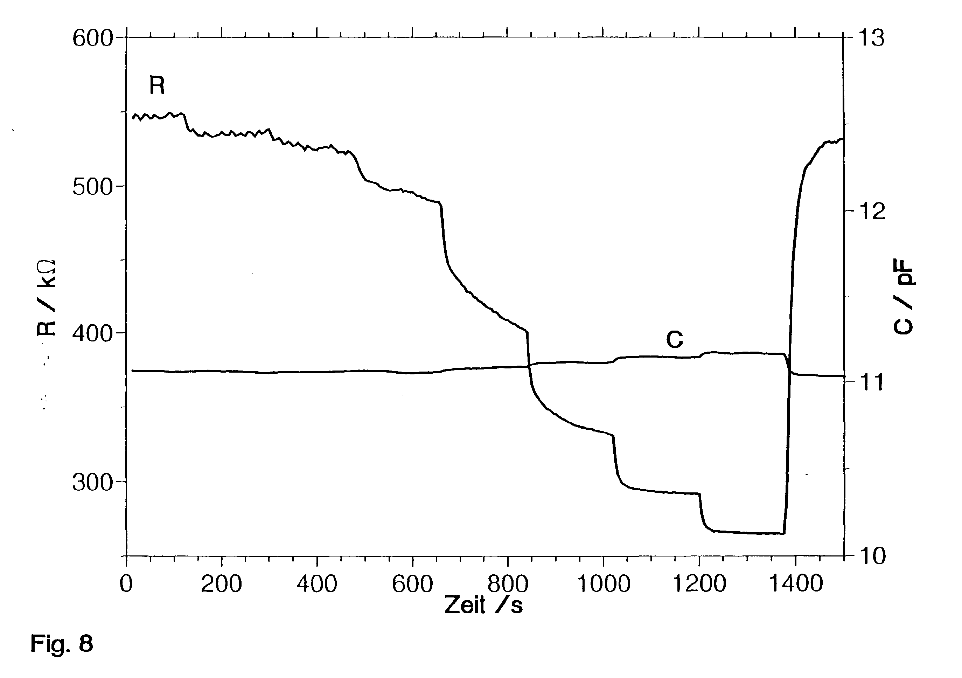

Der Sensor B (Fig. 8) wies eine Fingerbreite von s=100µm auf. Sensor B wurde in komplett in Dickschichttechnik gefertigt.

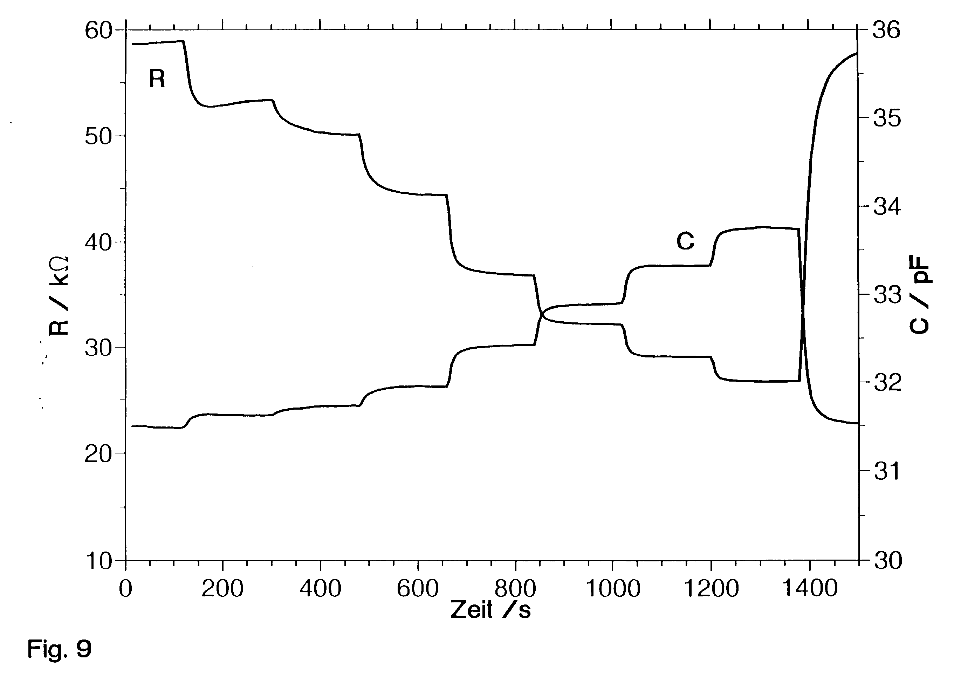

Der Sensor C (Fig. 9) wies eine Fingerbreite von s=20µm auf.
Sensor C wurde komplett nach dem erfindungsgemäßen Verfahren entsprechend den Schritten 1 bis 7 gefertigt.

Es ist deutlich ersichtlich, wie der Widerstand des in teuren Hybridtechnik hergestellten Sensors A bei 0 ppm Ammoniak bei ca. 30 kΩ liegt, mit Änderungen des Widerstandes bei Begasung um 10 kΩ. Die Kapazität ändert sich um ca. 1,5 pF, bei Nullwerten um 83 pF. Solche Werte von Widerstand und Kapazität sind mit gängiger Technologie kostengünstig messbar.

Der Widerstand des Sensors B, der in herkömmlicher Dickschichttechnik hergestellt wurde, weist zwar ebenfalls Änderungen um den Faktor 1,5 auf. Allerdings beträgt der Nullwert ca. 550 kΩ und ist nur noch mit hochohmigen Impedanzanalysatoren messbar. Auch die Kapazität lässt sich nur noch sehr aufwendig bestimmen. Kostengünstige Messungen können mit Hilfe dieses Sensortypes nicht mehr durchgeführt werden.

Der erfindungsgemäß hergestellte Sensor C, weist eine Widerstandsänderung um ca. 30 kΩ auf, bei einem Nullwert um 60 kΩ. Die Kapazität ändert sich um ca. 2 pF bei einem Nullwert 31,5 pF. Solche Werte von Widerstand und Kapazität sind mit gängiger Technologie kostengünstig messbar.

Zusätzlich ist bei der erfindungsgemäßen Herstellung ein derzeit noch unverstandener Effekt, der zu einer Empfindlichkeitserhöhung führt, zu beobachten. Während bei der Herstellung in einer "reinen" Technologie (Dünnschichttechnik oder Dickschichttechnik, Sensoren A oder B) das Verhältnis der Widerstandswerte von 0 ppm und 100 ppm Ammoniak nur 1,5 beträgt, beobachtet man bei einem erfindungsgemäßen Sensor ein Widerstandsverhältnis von zwei. Auch die zu messende relative Kapazitätsänderung ΔC/C₀ ist beim erfindungsgemäßen Sensortyp C mit 6,3% am größten. Eine mögliche Ursache könnte in einem weiteren Vorteil dieses Verfahrens liegen, dass durch das verbesserte Aspektverhältnis A, d.h. im vergrößerten Verhältnis der Dicke d der Elektrodenfinger zur Fingerbreite b (Aᵥ=d/b) vermehrt Feldlinien in der Funktionsschicht verlaufen. Zum Vergleich: Bei Sensor A betrug das Aspektverhältnis Aᵥ=0,2µm/10µm=2%. Bei Sensor B betrug das Aspektverhältnis Aᵥ=8µm/100µm=8%. Bei Sensor C betrug das Aspektverhältnis Aᵥ=4µm/20µm=20%.

Die beschriebene Vorgehensweise kann zur Herstellung von Übertragern für Stoffsensoren mit beliebigen Funktionsschichten verwendet werden. Es spielt seine Vorteile vor allem dann aus, wenn hochohmige oder kapazitive Funktionsschichten verwendet und in Dickschichttechnik gefertigt werden sollen. Dabei bietet es den Vorteil der Temperaturstabilität von Sensoren, die in Dickschichttechnik hergestellt werden, in Kombination mit einer Strukturauflösung von Sensoren, die in Dünnschichttechnik hergestellt werden. Weiterhin können Aspektverhältnisse erzielt werden, die die elektrischen Feldlinien mehr in der Funktionsschicht halten. Somit wird das Sensorsignal im Verhältnis zum Nullwert größer.

### ZITIERTE LITERATUR

/1/ J. Gerblinger, M. Hausner, H. Meixner: Electric and Kinetic Properties of Screen-Printed Strontium Titanate Films at High Temperatures. J. Am. Cer. Soc., 78 [6] 1451-1456 (1995).
/2/ M. Prudenziati (editor).: Thick Film Sensors.
   Insbesondere Section I: Thick Film Technology,
   Seiten 3-37. Elsevier-Verlag, 1994.

## Patentansprüche

1. Hochtemperaturstoffsensor, umfassend
- ein Substrat (4),
- eine Anordnung (6), um den Sensor auf Temperatur zu bringen und zu halten, und
- eine schichtartige Kondensatorstruktur (38) mit Strukturgrößen kleiner als 50µm, auf die eine Funktionsschicht (18) aufgebracht ist,
**dadurch gekennzeichnet, dass** die schichtartige Kondensatorstruktur (38) folgendermaßen erzeugt wurde:
- Aufbringen einer geschlossenen oder bereits vorstrukturierten elektrisch leitfähigen Schicht als Vorläufer der Kondensatorstruktur (38) mittels Dickschichttechnik,
- Strukturierung der elektrisch leitfähigen Schicht mittels photolithographischem Strukturierungsverfahren.

2. Hochtemperaturstoffsensor nach Anspruch 1, **dadurch gekennzeichnet, dass** die Strukturierung der elektrisch leitfähigen Schicht folgendermaßen erreicht wurde:
- Aufbringen einer geschlossenen photoempfindlichen Lackschicht auf die elektrisch leitfähige Schicht,
- Aufbringen einer Photomaske, die der Kondensatorstruktur entspricht, auf die Lackschicht,
- Belichtung der mit der Photomaske abgedeckten Lackschicht,
- Entfernen der belichteten Bereiche der Lackschicht,
- Entfernen der nicht vom Lack bedeckten Bereiche der elektrisch leitfähigen Schicht.

3. Hochtemperaturstoffsensor nach Anspruch 1, **dadurch gekennzeichnet, dass** die Strukturierung der elektrisch leitfähigen Schicht folgendermaßen erreicht wurde:
- Aufbringen einer geschlossenen photoempfindlichen Lackschicht auf die elektrisch leitfähige Schicht,
- Aufbringen einer Photomaske, die dem Negativ der Kondensatorstruktur entspricht, auf die Lackschicht,
- Belichtung der mit der Photomaske abgedeckten Lackschicht,
- Entfernen der unbelichteten Bereiche der Lackschicht,
- Entfernen der nicht vom Lack bedeckten Bereiche der elektrisch leitfähigen Schicht.

4. Hochtemperaturstoffsensor nach einem der Ansprüche 1 bis 3, **dadurch gekennzeichnet, dass** die Kondensatorstruktur (38) eine Interdigitalkondensatorstruktur ist.

5. Hochtemperaturstoffsensor nach Anspruch 4, **dadurch gekennzeichnet, dass** bei der Interdigitalkondensatorstruktur das Aspektverhältnis Dicke der Elektrodenfinger (d) zur Fingerbreite (b) größer als 0,10 ist.

6. Hochtemperaturstoffsensor nach einem der vorangehenden Ansprüche, **dadurch gekennzeichnet, dass** die Kondensatorstruktur (38) aus einem Metall besteht, insbesondere aus Au oder Pt.

7. Verwendung eines Hochtemperaturstoffensors nach einem der vorangehenden Ansprüche als Gassensor.

8. Verwendung eines Hochtemperaturstoffensors nach einem der vorangehenden Ansprüche 1 bis 6 als Abgassensor im Abgas eines Fahrzeugs mit Verbrennungsmotor.
